# EUROPEAN PATENT APPLICATION

(11) **EP 4 807 219 A1**
(43) Date of publication of application: **16.09.2026**
(21) Application number: 23958159.8
(22) Date of filing: 20.12.2023
(51) Int. Cl.: F16H 55/17, F16H 49/00

(54) **FLEXSPLINE AND HARMONIC DRIVE**

(30) Priority: 07.11.2023 CN 202311465731
(71) Applicant: REALMAN ROBOT CO., LTD., Beijing 100080 (CN)
(72) Inventor: JI, Haoyu, Beijing 100043 (CN); ZHENG, Suibing, Beijing 100043 (CN); ZHANG, Xulong, Beijing 100043 (CN)
(74) Representative: AURODION PartmbB
(86) International application number: PCT/CN2023/140188
(87) International publication number: WO 2025/097561

(57) **Abstract**

A flexspline and a harmonic reducer, the flexspline compising flexspline transmission teeth, a first flexspline portion, a second flexspline portion and a third flexspline portion, wherein the outer diameter of the first flexspline portion is smaller than an outer diameter of the second flexspline portion, an inner diameter of the first flexspline portion is smaller than an inner diameter of the third flexspline portion, and an outer diameter of the second flexspline portion is larger than an outer diameter of the third flexspline portion; and the flexspline transmission teeth are arranged on an outer periphery of the third flexspline portion. In the present disclosure, the flexspline is configured to include the first flexspline portion, the second flexspline portion and the third flexspline portion, and the outer diameter of the second flexspline portion is larger than the outer diameter of the first flexspline portion and the outer diameter of the third flexspline portion, the second flexspline portion may play a role in fixing the flexspline, the number of parts required to fix the flexspline is reduced, and the size of each fixing part is reduced in an axial length of the flexspline, and the size of the harmonic reducer can be reduced. In the present disclosure, the space in the flexspline may be enlarged, so that wiring is facilitated, the space is effectively saved, and a high strength can be still guaranteed, the structure is simple, popularization is facilitated.

## Description

### CROSS-REFERENCES

This application is based on the Chinese patent application with application number 2023114657319 and application date of November 7, 2023, and claims the priority of the Chinese patent application, the entire content of the Chinese patent application is hereby introduced into this application as a reference.

### TECHNICAL FIELD

The present disclosure belongs to the technical field of transmission reduction, and particular to a flexspline and a harmonic reducer.

### BACKGROUND ART

Flexspline, also known as flexible wheels, comes in various forms, such as thin-walled cup-shaped, thin-walled cylindrical shaped or flat-embedded types. The thin-walled cylindrical flexspline has a toothed ring on the outer surface of its open end, which deforms as the wave generator rotates, and the bottom of the cylinder is connected to the output shaft. Conventional gear transmissions generally utilize rigid mechanisms, and their rotating parts are also rigid. Harmonic gear transmission is a new type of transmission that utilizes the elastic deformation of flexible working components to achieve the purpose of transmission. Flexspline is used in harmonic reducers, which are mechanical transmitters that rely on flexible components to generate elastic mechanical waves to transmit power and motion. Harmonic reducers feature high transmission efficiency, compact size, light weight, smooth transmission, and low noise, and are widely used in the field of robotics, particularly in collaborative robotic arms and service robots. With the advancement of robotics technology, the size requirements for harmonic reducers are becoming increasingly stringent. Harmonic reducers consist of three basic components: a wave generator, a flexspline, and a circular spline.

Currently, miniaturization of harmonic reducers is the trend, but the miniaturization of harmonic reducer may cause the problems of low quality, such as reduced structural strength and insufficient load-bearing capacity, which lead to short life, indirectly increasing the cost of enterprises. The miniaturization of harmonic reducers is affected by the deformation of the flexspline. The size of flexspline is limited, which makes the miniaturization of harmonic reducer have design barriers. The only way to reduce size of harmonic reducer is by reducing the wall thickness of the flexspline, but it will inevitably increase processing difficulty, reduce the overall strength, reduce the output torque, and lower the load-bearing capacity, and shorten the overall life of harmonic reducer as well. The manufacturing cost and use cost of enterprises are greatly improved.

### SUMMARY

### (1) Objectives of the present disclosure

The objective of the present disclosure is to provide a flexspline that reduces its volume without reducing the wall thickness of the flexspline to reduce the volume, and reduces the axial dimensions without lowering the load-bearing capacity. A second objective is to provide a harmonic reducer that may simultaneously reduce the radial and axial dimensions, reduce the number of parts, while maintaining strength, output torque and service life.

### (2) Technical solution

In order to solve the above problems, the present disclosure provides a flexspline, which includes flexspline transmission teeth, a first flexspline portion, a second flexspline portion and a third flexspline portion; the first flexspline portion and the third flexspline portion are connected via the second flexspline portion; the outer diameter of the first flexspline portion is smaller than the outer diameter of the second flexspline portion, the inner diameter of the first flexspline portion is smaller than the inner diameter of the third flexspline portion, the outer diameter of the second flexspline portion is larger than the outer diameter of the third flexspline portion; the flexspline is connected to the exterior via the second flexspline portion; the flexspline transmission teeth are arranged on the outer periphery of the third flexspline portion.

In another aspect of the present disclosure, preferably, the second flexspline portion includes a first side, a second side and a connecting portion, the length of the first side along the radial direction of the flexspline is greater than the length of the second side along the radial direction of the flexspline; the first side and the second side are connected via the connecting portion, the first side is connected to the first flexspline portion, and the second side is connected to the third flexspline portion.

In another aspect of the present disclosure, preferably, the first flexspline portion, the first side, the connecting portion, the second side and the third flexspline portion are smoothly connected to each other.

In another aspect of the present disclosure, preferably, the axial length of the first flexspline portion is L₁, the axial length of the second flexspline portion of is L₂, the axial length of the third flexspline portion is L₃, the inner diameter of the third flexspline portion is d, L₁, L₂, L₃ and d satisfy the following relationship: L₁+L₂+L₃≥ 0.5d.

In another aspect of the present disclosure, preferably, the length of the first side along the radial direction of the flexspline is L₄, the length of the second side along the radial direction of the flexspline is L₅, L₁, L₂, L₃, L₄, L₅ and d satisfy the following relationship: L₁+L₂+L₃+L₄+L₅≥1.2d.

In another aspect of the present disclosure, preferably, the connecting portion is configured as a curved structure, the first side and the second side are connected via the curved structure, the radius of the curved structure satisfies the following formula: R≥1+§, wherein, § denotes the wall thickness of the flexspline, and its unit is mm.

In another aspect of the present disclosure, preferably, the first flexspline portion is made of rigid material.

In another aspect of the present disclosure, preferably, a harmonic reducer includes the flexspline as described above, and further includes a first circular spline, a second circular spline, and a wave generator; the first circular spline and the second circular spline are annular structures, the first circular spline is connected to the second circular spline, the second circular spline is arranged in the annular structure of the first circular spline; the flexspline is arranged in an annular receiving cavity of the first circular spline and the second circular spline, circular spline transmission teeth for meshing with the flexspline transmission teeth are arranged on the inner periphery of the first circular spline; the second circular spline is connected to the first flexspline portion; the wave generator is arranged in the annular accommodation cavity of the third flexspline portion.

In another aspect of the present disclosure, preferably, the inner ring of the first circular spline is provided with a first circular spline portion, a second circular spline portion and a third circular spline portion; the inner diameter of the second circular spline portion is respectively larger than the inner diameter of the first circular spline portion and the inner diameter of the third circular spline portion; the inner diameter of the second circular spline portion is matched to the outer diameter of the second flexspline portion; the axial length of the first circular spline portion is greater than or equal to the axial length of the second circular spline; the inner periphery of the first circular spline portion is provided with a first V-shaped annular groove, the outer periphery of the second circular spline is provided with a second V-shaped annular groove, the second V-shaped annular groove cooperates with the first V-shaped annular groove to form a rectangular annular groove; and the harmonic reducer further includes a roller, the roller is arranged in the rectangular annular groove.

In another aspect of the present disclosure, preferably, the connection manners between the second circular spline and the first flexspline portion includes: the second circular spline and the first flexspline portion are integrally formed; the inner periphery of the second circular spline is provided with circular spline threads, the outer periphery of the first flexspline portion is provided with flexspline threads matched with the circular spline threads; or the inner periphery of the second circular spline is provided with internal teeth, the outer periphery of the first flexspline portion is provided with external teeth having the same number as the internal teeth of the second circular spline.

### (3) Beneficial effects

The above technical solution of the present disclosure has the following beneficial technical effects. In the present disclosure, the flexspline is configured to include the first flexspline portion, the second flexspline portion and the third flexspline portion, and the diameter of the second flexspline portion is greater than that the diameter of the first flexspline portion and the diameter of the third flexspline portion, the second flexspline portion may server to secure the flexspline. This reduces the number of parts required for securing the flexspline, and reduce the dimensions of the securing components along the axial length of the flexspline, thereby reducing the volume of the harmonic reducer. In the present disclosure, the internal space of the flexspline may be expanded, for facilitating cable routing and effectively saving space, while still ensuring a high strength. The structure is simple, making it conducive to widespread adoption.

### BRIEF DESCRIPTION OF THE DRAWINGS

Figure 1 is an overall structural diagram of a flexspline according to an embodiment of the present disclosure;
Figure 2 is a cross-sectional view of a harmonic reducer according to an embodiment of the present disclosure;
Figure 3 is a cross-sectional view of a flexspline and a second circular spline according to an embodiment of the present disclosure;

Reference numerals: 1: flex spline; 1-1: flexspline transmission teeth; 1-2: first flexspline portion; 1-3: second flexspline portion; 1-4: third flexspline portion; 1-3-1: first side; 1-3-2: second side; 1-3-3: connecting portion; 2: first circular spline; 2-1: circular spline transmission teeth; 2-2: first circular spline portion; 2-3: second circular spline portion; 2-4: third circular spline portion; 3: second circular spline; 4: wave generator; 5: roller.

### DETAILED DESCRIPTION OF EXEMPLARY EMBODIMENTS

To make the objectives, technical solutions, and advantages of the present disclosure more clearly understood, the present disclosure will be further described in detail below in conjunction with specific embodiments and with reference to the accompanying drawings. It should be noted that the descriptions are merely illustrative and are not intended to limit the scope of the present disclosure. In addition, in the following description, descriptions of well-known structures and technologies are omitted to avoid unnecessary confusion of the concepts of the present disclosure.

The accompanying drawings illustrate schematic diagrams of layer structures according to embodiments of the present disclosure. These drawings are not drawn to scale, and some details may be enlarged or may be omitted for clarity. The shapes of the various regions and layers shown in the figure, as well as their relative sizes and positions, are merely illustrative. In practice, there may be deviations due to manufacturing tolerances or technical limitations, and those skilled in the art may design regions/layers with different shapes, sizes, and relative positions based on actual needs.

Obviously, the described embodiments are only some embodiments of the present disclosure, not all embodiments. Based on the embodiments of the present disclosure, all other embodiments obtained by ordinary technicians in this field without making creative efforts are within the scope of protection of the present disclosure.

In the description of the present disclosure, it should be noted that the terms "first", "second" and "third" are only used for descriptive purposes and should not be understood as indicating or implying relative importance.

In addition, the technical features involved in the different embodiments of the present disclosure described below may be combined with each other as long as they do not conflict with each other.

The present disclosure will be described in more detail below with reference to the accompanying drawings. In each of the accompanying drawings, identical elements are represented by similar reference numerals. For the sake of clarity, the various parts in the accompanying drawings are not drawn to scale.

### Embodiment 1

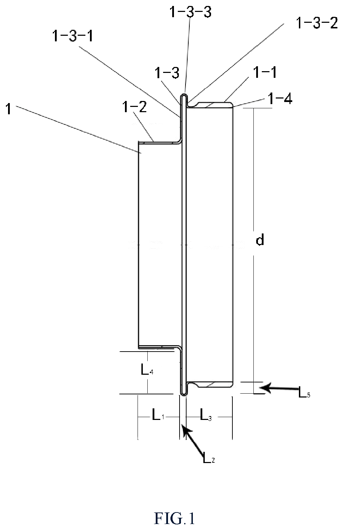

A flexspline is provided. Figure 1 shows a structural diagram of a flexspline according to an embodiment of the present disclosure. As shown in Figure 1, the flexspline 1 includes a flexspline transmission teeth 1-1, a first flexspline portion 1-2, a second flexspline portion 1-3 and a third flexspline portion 1-4; the axial size relationship between the first flexspline portion 1-2, the second flexspline portion 1-3 and the third flexspline portion 1-4 is not limited herein. The axial sizes of the three portions may be different, the axial sizes of the three portions may be the same, the axial size of any one of the three portions may be larger, the axial sizes of the other two portions may be the same, and the like. Optionally, in this embodiment, the axial lengths of the first flexspline portion 1-2 and the third flexspline portion 1-4 are larger, the axial length of the second flexspline portion 1-3 is smaller. The axial length relationship between the first flexspline portion 1-2 and the third flexspline portion 1-4 is not limited.

The first flexspline portion 1-2 and the third flexspline portion 1-4 are connected via the second flexspline portion 1-3. The specific connection manner is not limited herein and may be a smooth straight line connection, a curved line connection, or the like. Furthermore, as shown in Figure 1, the connection is a micro-bending structure, and the opening of the micro-bending structure faces the outside of the flexspline. The micro-bending structure further increases the structural strength of the flexspline, increases the load-bearing capacity, and improves the service life of the flexspline.

The outer diameter of the first flexspline portion 1-2 is smaller than the outer diameter of the second flexspline portion 1-3, and the inner diameter of the first flexspline portion 1-2 is smaller than the inner diameter of the third flexspline portion 1-4. The outer diameter of the second flexspline portion 1-3 is larger than the outer diameter of the third flexspline portion 1-4. The outer diameter of the second flexspline portion 1-3 is the largest, and the outer diameter of the first flexspline portion 1-2 is the smallest. As shown in Figure 1, the second flexspline portion 1-3 protrudes beyond the first flexspline portion 1-2 and the third flexspline portion 1-4. This may enhance the bearing capacity of the flexspline, achieving miniaturization without reducing its strength. This setting may reduce the damage to the flexspline during the movement and deformation process, and extend the service life of the flexspline. The specific radial proportional relationship of the three portions is not limited here. The wall thicknesses of the first flexspline portion 1-2, the second flexspline portion 1-3 and the third flexspline portion 1-4 are not specifically limited here. They may be a single-thickness structure, or a structure with one end thicker than the other, or a structure in which the first flexspline portion 1-2 has a uniform thickness, and one end of the second flexspline portion 1-3 and the third flexspline portion 1-4 is thicker and the other end is thinner. The specific structures of the first flexspline portion 1-2, the second flexspline portion 1-3 and the third flexspline portion 1-4 are not limited here. Optionally, the first flexspline portion 1-2 and the third flexspline portion 1-4 are respectively cylindrical structures with the same diameter, or one of them is a cylindrical structure with the same diameter and the other is a cylindrical structure with different diameters, or both may be cylindrical structures with different diameters respectively. Optionally, as shown in Figure 1, in this embodiment, the first flexspline portion 1-2 and the third flexspline portion 1-4 are respectively cylindrical structures with constant diameters. The flexspline 1 adopts a hollow structure to maximize the internal space, to provide an operating space for internal wiring and installation. The flexspline adopts a three-section structure, which may effectively increase the strength of the flexspline. Compared with the traditional structure, under the same load-bearing conditions, the radial and/or axial size of the flexspline 1 may be greatly reduced, that is, the overall size of the harmonic reducer is reduced, which makes it possible to miniaturize the harmonic reducer and at the same time reduce the size of the components fixed in the harmonic reducer. The flexspline 1 is connected to the outside through the second flexspline portion 1-3.

The flexspline transmission teeth 1-1 are arranged on the outer periphery of the third flexspline portion 1-4. The axial length relationship between the flexspline transmission teeth 1-1 and the outer periphery of the third flexspline portion 1-4 is not limited here. Optionally, the axial lengths of the two may be the same, or the axial length of the flexspline transmission teeth 1-1 may be smaller than the axial length of the outer periphery of the third flexspline portion 1-4, and when the axial length of the flexspline transmission teeth 1-1 is smaller than the axial length of the outer periphery of the third flexspline portion 1-4, it may be arranged at the end of the third flexspline portion 1-4 away from the second flexspline portion 1-3, or it may be arranged at the end of the third flexspline portion 1-4 close to the second flexspline portion 1-3, or it may be arranged at the middle of the third flexspline portion 1-4. Optionally, in this embodiment, the axial length of the flexspline transmission teeth 1-1 is smaller than the axial length of the outer periphery of the third flexspline portion 1-4, and the flexspline transmission teeth 1-1 are arranged at the end of the third flexspline portion 1-4 away from the second flexspline portion 1-3.

In this embodiment, the flexspline is configured to include a first flexspline portion, a second flexspline portion and a third flexspline portion, the diameter of the second flexspline portion is larger than that of the first flexspline portion and the third flexspline portion. The second flexspline portion may serve to fix the flexspline, reducing the number of parts required for fixing the flexspline and minimizing the size of the securing portions along the axial length of the flexspline, without additional parts to connect the flexspline to other parts of the harmonic reducer, thus reducing the components for connection, reducing the overall weight of the harmonic reducer. Furthermore, the axial length of the connecting portion of the harmonic reducer is reduced, further miniaturizing the overall volume, and further achieving miniaturization. The present disclosure may expand the space inside the flexspline, facilitate wiring, effectively save space, still ensure high strength, have a simple structure and be beneficial to popularization.

In one embodiment of the present disclosure, further, the second flexspline portion 1-3 includes a first side 1-3-1, a second side 1-3-2 and a connecting portion 1-3-3, the length of the first side 1-3-1 along the radial direction of the flexspline is greater than the length of the second side 1-3-2 along the radial direction of the flexspline. The first side 1-3-1 and the second side 1-3-2 are connected via the connecting portion 1-3-3 The first side 1-3-1 is connected to the first flexspline portion 1-2, and the second side 1-3-2 is connected to the third flexspline portion 1-4. The specific relationship between the first side 1-3-1 and the second side 1-3-2 is not limited here, optionally, it may be a parallel relationship or a non-parallel relationship. The first side 1-3-1 and the second side 1-3-2 may be a straight line structure or a curved structure, or one of the two portions may be a curved structure and the other portion may be a straight line structure. Optionally, in this embodiment, the first side 1-3-1 and the second side 1-3-2 are parallel and both are straight line structures. The specific relationship between the first side 1-3-1 and the first flexspline portion 1-2, as well as between the second side 1-3-2 and the third flexspline portion 1-4 is not limited herein. Optionally, the first side 1-3-1 may be perpendicular to the first flexspline portion 1-2 or non-perpendicular. The second side 1-3-2 and the third flexspline portion 1-4 may be perpendicular or non-perpendicular. Optionally, in this embodiment, the first side 1-3-1 is perpendicular to the first flexspline portion 1-2, the second side 1-3-2 is perpendicular to the third flexspline portion 1-4. The specific relationship between the first side 1-3-1 and the second side 1-3-2 is not limited here, one end of the first side 1-3-1 and the second side 1-3-2 may be flush and the other end may not be flush, or both ends may not be flush. Optionally, in this embodiment, both ends may be not flush. Optionally, in this embodiment, one end is flush and the other end is not flush. Further, the end close to the connecting portion 1-3-3 is flush. The proportional relationship between the two is not specifically limited here. The structure of the connection portion 1-3-3 is not specifically defined herein. Optionally the connecting portion 1-3-3 may be a curved or straight line structure. Optionally, in this embodiment, the connecting portion 1-3-3 has a curved structure, which may enhance the overall strength of the flexspline. There are no specific limitations on the curvature of the connection portion 1-3-3, the distance between the first side 1-3-1 and the second side 1-3-2, or the thickness of the first side 1-3-1, the second side 1-3-2 and the connection portion 1-3-3. Optionally, the thicknesses may be uniform or vary. This configuration reduces the overall axial dimension of the flexspline while also providing better structural strength and greater load-bearing capacity.

In one embodiment of the present disclosure, further, the first flexspline portion 1-2, the first side 1-3-1, the connecting portion 1-3-3, the second side 1-3-2 and the third flexspline portion 1-4 are smoothly connected to each other. It is not limited here whether the smooth connection is inside or outside the flexspline. Optionally, in this embodiment, the first portion 1-2, the first side 1-3-1 of flexspline, the connecting portion 1-3-3, the second side 1-3-2 and the third flexspline portion 1-4 are smoothly connected inside and outside. There is no specific restriction on the curvature of the connection points, nor is it limited whether the curvatures are the same. The smooth connection may make the structural strength of the flexspline better, the bearing capacity greater, and the service life longer.

The inner diameter of the third flexspline portion 1-4 is d, L₁, L₂, L₃ and d satisfy the following relationship: L₁+L₂+L₃≥0.5d.

The length of the first side 1-3-1 along the radial direction of the flexspline is L₄, the length of the second side 1-3-2 along the radial direction of the flexspline is L₅, L₁, L₂, L₃, L₄, L₅ and d satisfy the following relationship: L₁+L₂+L₃+L₄+L₅≥1.2d.

The connecting portion 1-3-3 is configured as a curved structure, the first side 1-3-1 and the second side 1-3-2 are connected by the curved structure, the radius of the curved structure satisfies the following formula: R≥1+§, § is the thickness of the wall, and its unit is mm.

In one embodiment of the present disclosure, further, the axial length of the first flexspline portion 1-2 is L₁, the axial length of the second flexspline portion 1-3 is L₂, the axial length of the third flexspline portion 1-4 is L₃, the inner diameter of the third flexspline portion 1-4 is d, L₁, L₂, L₃ and d satisfy the following relationship: L₁+L₂+L₃≥0.5d.

In one embodiment of the present disclosure, further, the length of the first side 1-3-1 along the radial direction of the flexspline is L₄, the length of the second side 1-3-2 along the radial direction of the flexspline is L₅, and L₁, L₂, L₃, L₄, L₅ and d satisfy the following relationship: L₁+L₂+L₃+L₄+L₅≥1.2d.

In one embodiment of the present disclosure, further, the connecting portion 1-3-3 is configured as a curved structure, the first side 1-3-1 and the second side 1-3-2 are connected by the curved structure. The radius of the curved structure satisfies the following formula: R≥1+§,§ denotes the wall thickness, and it unit is mm. The curve is at least a Class A curved surface, with the curvature of the surface being tangent to it. The Class A surface refers to an engineering section in the automotive development process known as "Class A Engineering", which focuses on ensuring that the surface quality meets requirements of a Class A curved surface.

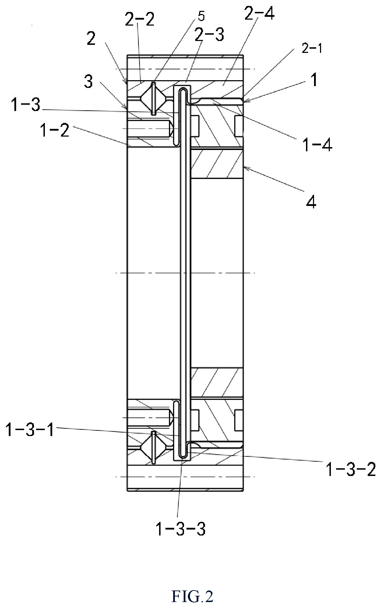

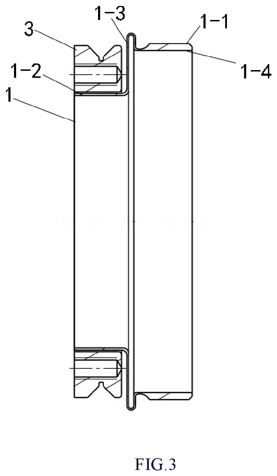

In one embodiment of the present disclosure, further, the flexspline 1 is provided in a harmonic reducer. Figure 2 shows the structure of a harmonic reducer according to one embodiment of the present disclosure. Figure 3 shows a cross-sectional view of the flexspline and a second circular spline according to one embodiment of the present disclosure. As shown in Figure 2 and Figure 3, the harmonic reducer includes a second circular spline 3, which is connected to the first flexspline portion 1-2. Here, the inner periphery of the second circular spline 3 is connected with the outer periphery of the first flexspline portion 1-2. The axial length relationship between the second circular spline 3 and the first flexspline portion 1-2 is not limited here, and the axial lengths of both may be the same or different.

The connection manners include the followings. The second circular spline 3 is integrally formed with the first flexspline portion 1-2; the integrally formed structure has high strength and prevents slippage. The inner periphery of the second circular spline 3 is provided with the circular spline threads, the outer periphery of the first flexspline portion 1-2 is provided with the flexspline threads matched with the circular spline threads; the two are connected by threads, and the installation method is simple. Alternatively, the inner periphery of the second circular spline 3 is provided with circular spline internal teeth, the outer periphery of the first flexspline portion 1-2 is provided with flexspline external teeth having the same number of teeth as the circular spline internal teeth. The two are connected by the circular spline internal teeth and the flexspline external teeth, which simplifies the installation and is easy to promote.

In one embodiment of the present disclosure, further, the material of the first flexspline portion 1-2 and the third flexspline portion 1-4 is different. Optionally, the first flexspline portion 1-2 may be made of a material with higher rigidity, and the third flexspline portion 1-4 may be made of a material with greater flexibility. This may extend the service life of the flexspline.

### Embodiment 2

A harmonic reducer is provided. Figure 2 shows structural view of the harmonic reducer according to an embodiment of the present disclosure. As shown in Figure 2, the harmonic reducer includes the flexspline 1 as described above, and further includes a first circular spline 2, a second circular spline 3 and a wave generator 4.

The first circular spline 2 and the second circular spline 3 are annular structures, the first circular spline 2 is connected to the second circular spline 3; the second circular spline is arranged in the annular structure of first circular spline. The radial relationship between the first circular spline 2 and the second circular spline 3 is not limited here, nor is the axial relationship between the two. The first circular spline 2 is connected to the second circular spline 3. The connection structure between the two is not limited here and may be a cross-roller bearing structure, or the like. As shown in Figure 2, the connection structure is that the inner ring of the first circular spline 2 is provided with a first circular spline portion 2-2, a second circular spline portion 2-3 and a third circular spline portion 2-4. The ratio relationship of the axial lengths between the three is not limited here, the inner diameter of the second circular spline portion 2-3 is respectively larger than the inner diameter of the first circular spline portion 2-2 and the inner diameter of the third circular spline portion 2-4. The size relationship between the inner diameter of the first circular spline portion 2-2 and the inner diameter of the third circular spline portion 2-4 is not limited here. The inner diameter of the first circular spline portion 2-2 may be larger than the inner diameter of the third circular spline portion 2-4, or the inner diameter of the third circular spline portion 2-4 may be larger than the inner diameter of the first circular spline portion 2-2, or the inner diameter of the two may be the same. The inner diameter of the second circular spline portion 2-3 is adapted to the outer diameter of the second flexspline portion 1-3. The second flexspline portion 1-3 may be placed within the second circular spline portion 2-3, with the two interlocking. The axial length of the first circular spline portion 2-2 is greater than or equal to the axial length of the second circular spline 3, the second circular spline 3 is arranged in the annular hollow structure of the first circular spline portion 2-2, the axial length of the first circular spline 2 is the same as the axial length of the flexspline 1. The inner periphery of the first circular spline portion 2-2 is provided with a first V-shaped annular groove. The specific location of the first V-shaped annular groove on the first circular spline portion 2-2 is not limited herein, the first V-shaped annular groove may be arranged at the center position of the first circular spline portion 2-2, or may be arranged at a position biased to one end. Optionally, in this embodiment, the first V-shaped annular groove is arranged at the center position of the first circular spline portion 2-2, the specific shape of the first V-shaped annular groove is not limited. A second V-shaped annular groove is provided on the outer periphery of the second circular spline 3, which cooperates with the first V-shaped annular groove to form a rectangular annular groove. The harmonic reducer further includes a roller 5, which is provided in the rectangular annular groove.

Optionally, the roller 5 is a cylindrical structure made of metal material, is cross-mounted in a rectangular ring groove formed by the first circular spline 2 and the second circular spline 3. Optionally, in this embodiment, the first circular spline 2 is provided with an entry and exit position for the roller 5, and a roller stop block is provided. After the roller 5 is installed, the roller stop block is placed at the entry and exit position of the roller 5 and is fixedly connected to the first circular spline 2. The connection here may be achieved screws. This embodiment realizes axial and radial load-bearing and power transmission between the input circular spline and the output circular spline. Compared with the traditional design, the number of structural parts is reduced, the thickness of the structure is reduced, the weight of the bearing wall is descried, so that the harmonic weight is lighter and the structure is simpler. The diameter of the harmonic reducer of this structure is the diameter of the circular spline, the structure is simple, the purpose of the harmonic speed reducer with a small size is realized. The first circular spline 2 and the second circular spline 3 are connected by rollers 5, the first circular spline 2 is used as the outer ring of the roller bearing, the second circular spline 3 is used as the inner ring of the roller bearing, so that the first circular spline 2, the second circular spline 3 and the roller 5 form an integrated structure of roller bearings and circular splines. The first circular spline 2 and the second circular spline 3 are connected to form an input circular spline or an output circular spline.

When the first circular spline 2 is fixed, the power is output through the second circular spline 3 under the cooperation of the roller 5. When the second circular spline 3 is fixed, the power is output through the first circular spline 2 under the cooperation of the roller 5. The materials of the first circular spline 2 and the second circular spline 3 are not limited here. Optionally, metal materials may be adopted, further, optionally, the materials may be self-lubricating materials. In this embodiment, optionally, the first rigid ring 2 and the second rigid ring 3 are uniformly machined with threaded holes on their upper end faces and along the circumference of their outer rings, which serve as mounting holes for the input circular spline and the output circular spline. The end face mounting or radial mounting mode may be selected according to the practical requirements, and the harmonic reducer may be securely mounted by using standard screws in practice.

The first flexspline portion 1-2, the second flexspline portion 1-3 and the third flexspline portion 1-4 are all arranged in the annular receiving cavity of the first circular spline 2 and the second circular spline 3. When the flexspline is arranged in the harmonic reducer, the relationship between the two ends of the flexspline and the two ends of the combination of the first circular spline and the second circular spline is not limited here. Optionally, the relationship may be flush, or a relationship in which one end is flush and the other end is retracted into the interior of the harmonic reducer, or a relationship in which both ends are retracted. When retracted, space may be provided for the installation of other components. The inner periphery of the first circular spline 2 is provided with circular spline transmission teeth 2-1 that mesh with the flexspline transmission teeth 1-1. Optionally, in this embodiment, the circular spline transmission teeth 2-1 are arranged on the inner periphery of the third circular spline portion. The tooth number relationship between the flexspline transmission teeth 1-1 and the circular spline transmission teeth 2-1 is not limited here. Optionally, the flexspline transmission teeth 1-1 may two teeth less than that of the circular spline transmission teeth 2-1. The harmonic reducer achieves the reduction ratio through the difference in number of teeth between the flexspline transmission teeth 1-1 and the circular spline transmission teeth 2-1. The smaller the tooth difference, the greater the reduction ratio. The specific structure of the flexspline transmission teeth 1-1 and the circular spline transmission teeth 2-1 is also not limited. Optionally, both of them are involute gears or circular arc gears.

Figure 3 shows a cross-sectional view of a flexspline and a second circular spline according to an embodiment of the present disclosure. As shown in Figure 3, the second circular spline 3 is connected to the first flexspline portion 1-2. The connection manners may adopt various method. For example, the second circular spline 3 is integrally formed with the first flexspline portion 1-2, and integrally formed structure has high strength and prevents movement. Optionally, the inner periphery of the second circular spline 3 is provided with the circular spline threads, the outer periphery of the first flexspline portion 1-2 is provided with the flexspline threads matching the circular spline threads. The two are connected by threads, and the installation method is simple. Optionally, the inner periphery of the second circular spline 3 is provided with circular spline internal teeth, the outer periphery of the first flexspline portion 1-2 is provided with flexspline external teeth having the same number of teeth as the circular spline internal teeth. The two are connected by the circular spline internal teeth and the flexspline external teeth, making installation simple and facilitating widespread adoption.

The wave generator 4 is arranged in the annular receiving cavity of the third flexspline portion 1-4. The specific structure of the wave generator 4 is not limited here, nor is the axial length relationship with the third flexspline portion 1-4. In this embodiment, the wave generator 4 includes a cam and a flexible bearing. The cam is an annular rotating body structure machined from metal material, and the outer periphery is an elliptical structure. The power is input through the wave generator 4. When external power is input, the power is converted into rotational deformation of the flexible bearing. The flexspline 1 consequently undergoes corresponding deformation. The flexspline 1 meshes with the first circular spline 2, the flexspline 1 transmits power to the circular spline transmission teeth 2-1 through the flexspline transmission teeth 1-1, thereby realizing power transmission. The contact height between the circular spline transmission teeth 2-1 of the first circular spline 2 and the flexspline transmission teeth 1-1 of the flexspline 1 is identical, ensuring the output torque of the harmonic reducer.

In this embodiment, by configuring the first circular spline and second circular spline are as annular structures, with the second circular spline positioned within the annular structure of the first circular spline, the diameter of the designed harmonic reducer is set to that of the first circular spline. This reduces the volume of the harmonic reducer, the structure of the harmonic reducer of the embodiment is simpler and the realized size may be smaller. Connecting the second circular spline to the first flexspline portion simplifies the production process, reduces manufacturing difficulty, and lowers manufacturing costs. Furthermore, the flexspline does not shift within the structure, increasing structural stability. When miniaturizing the harmonic reducer, the elliptical cam in the wave generator rotates within the flexspline, causing deformation of the flexspline. If the radial length of the flexspline is too short, the flexspline is easily damaged during deformation process. Therefore, in this embodiment, the flexspline is arranged in three sections with different diameters, thereby increasing the load-bearing capacity of the harmonic flexspline, extending its service life. The components connected the flexspline and the circular spline are reduced, the axial length of the harmonic reducer may be further reduced, achieving the purpose of miniaturization, effectively saving space and still ensuring high strength and a simple structure, which is conducive to promotion.

It should be understood that the above-described specific embodiments of the present disclosure are merely used to illustrate or explain the principles of the present disclosure and do not constitute a limitation of the present disclosure. Therefore, any modifications, equivalent substitutions, improvements, and the like made without departing from the spirit and scope of the present disclosure should be included within the scope of protection of the present disclosure. Furthermore, the appended claims of the present disclosure are intended to cover all variations and modifications that fall within the scope and limits of the appended claims or within equivalent forms thereof.

## Claims

1. A flexspline, **characterized in that**: the flexspline (1) comprises flexspline transmission teeth (1-1), a first flexspline portion (1-2), a second flexspline portion (1-3) and a third flexspline portion(1-4);
the first flexspline portion (1-2) and the third flexspline portion (1-4) are connected via the second flexspline portion (1-3);
the outer diameter of the first flexspline portion (1-2) is smaller than the outer diameter of the second flexspline portion (1-3), the inner diameter of the first flexspline portion (1-2) is smaller than the inner diameter of the third flexspline portion (1-4), the outer diameter of the second flexspline portion (1-3) is larger than the outer diameter of the third flexspline portion (1-4); the flexspline (1) is connected to the exterior via the second flexspline portion (1-3);
the flexspline transmission teeth (1-1) are arranged on the outer periphery of the third flexspline portion (1-4).

2. The flexspline according to claim 1, **characterized in that**: the second flexspline portion (1-3) comprises a first side (1-3-1), a second side (1-3-2) and a connecting portion (1-3-3), the length of the first side (1-3-1) along the radial direction of the flexspline is greater than the length of the second side (1-3-2) along the radial direction of the flex spline; the first side (1-3-1) and the second side (1-3-2) are connected via the connecting portion (1-3-3), the first side (1-3-1) is connected to the first flexspline portion (1-2), and the second side (1-3-2) is connected to the third flexspline portion (1-4).

3. The flexspline according to claim 2, **characterized in that**: the first flexspline portion (1-2), the first side (1-3-1), the connecting portion (1-3-3), the second side (1-3-2) and the third flexspline portion (1-4) are smoothly connected to each other.

4. The flexspline according to claim 2, **characterized in that**: the axial length of the first flexspline portion (1-2) is L₁, the axial length of the second flexspline portion (1-3) of is L₂, the axial length of the third flexspline portion (1-4) is L₃, the inner diameter of the third flexspline portion (1-4) is d, L₁, L₂, L₃ and d satisfy the following relationship: L₁+L₂+L₃≥0.5d.

5. The flexspline according to claim 4, **characterized in that**: the length of the first side (1-3-1) along the radial direction of the flexspline is L₄, the length of the second side (1-3-2) along the radial direction of the flexspline is L₅, L_{1,} L₂, L₃, L₄, L₅ and d satisfy the following relationship: L₁+L₂+L₃+L₄+L₅≥1.2d.

6. The flexspline according to claim 2, **characterized in that**: the connecting portion (1-3-3) is configured as a curved structure, the first side (1-3-1) and the second side (1-3-2) are connected via the curved structure, the radius of the curved structure satisfies the following formula: R≥1+§, §denotes the wall thickness, its unit is mm.

7. The flexspline according to claim 1, **characterized in that**: the first flexspline portion (1-2) is made of rigid material.

8. A harmonic reducer, **characterized in that**: it comprises the flexspline (1) as claimed in any one of claims 1 to 7, further comprises a first circular spline (2), a second circular spline (3) and a wave generator (4);
the first circular spline (2) and the second circular spline (3) are annular structures, the first circular spline (2) is connected to the second circular spline (3), the second circular spline (3) is arranged in the annular structure of the first circular spline (2);
the flexspline is arranged in an annular receiving cavity of the first circular spline (2) and the second circular spline (3), circular spline transmission teeth (2-1) for meshing with the flexspline transmission teeth (1-1) are arranged on the inner periphery of the first circular spline (2);
the second circular spline (3) is connected to the first flexspline portion (1-2);
the wave generator (4) is arranged in the annular accommodation cavity of the third flexspline portion (1-4).

9. The harmonic reducer according to claim 8, **characterized in that**:
the inner ring of the first circular spline (2) is provided with a first circular spline portion (2-2), a second circular spline portion (2-3) and a third circular spline portion (2-4);
the inner diameter of the second circular spline portion (2-3) is respectively larger than the inner diameter of the first circular spline portion (2-2) and the inner diameter of the third circular spline portion (2-4);
the inner diameter of the circular spline second portion (2-3) is matched to the outer diameter of the second flexspline portion (1-3);
the axial length of the first circular spline portion (2-2) is greater than or equal to the axial length of the second circular spline (3);
the inner periphery of the first circular spline portion (2-2) is provided with a first V-shaped annular groove, the outer periphery of the second circular spline (3) is provided with a second V-shaped annular groove, the second V-shaped annular groove cooperates with the first V-shaped annular groove to form a rectangular annular groove;
the harmonic reducer further comprises a roller (5), the roller (5) is arranged in the rectangular annular groove.

10. The harmonic reducer according to claim 8, **characterized in that**:
the connection manners between the second circular spline (3) and the first flexspline portion (1-2) comprises:
the second circular spline (3) and the first flexspline portion (1-2) are integrally formed;
the inner periphery of the second circular spline (3) is provided with circular spline threads, the outer periphery of the first flexspline portion (1-2) is provided with flexspline threads matched with the circular spline threads;
or the inner periphery of the second circular spline (3) is provided with internal teeth, the outer periphery of the first flexspline portion (1-2) is provided with external teeth having the same number as that of the internal teeth of the second circular spline.
